# FASCICULE DE BREVET EUROPEEN

(11) **EP 0 404 757 B1**
(45) Date de publication et mention de la délivrance du brevet: **21.07.1993**
(21) Numéro de dépôt: 87902099.8
(22) Date de dépôt: 19.03.1987
(51) Int. Cl.: G05D 1/03

(54) **GUIDAGE D'UN MOBILE SELON UN TRAJET PREDETERMINE SUR UNE AIRE SUPPORT**
FÜHRUNG EINES BEWEGLICHEN KÖRPERS AUF EINER TRÄGERFLÄCHE GEMÄSS EINER VORHERBESTIMMTEN BAHN
GUIDING OF A MOVING OBJECT ALONG A PREDETERMINED PATH ON A SUPPORTING AREA

(30) Priorité: 07.04.1986 FR 8605161
(43) Date de publication de la demande: 02.01.1991
(73) Titulaire: M.T.M. LEADER, F-59650 Villeneuve d'Ascq (FR)
(72) Inventeur: HACOT, Jean, Marie, F-59800 Lille (FR)
(74) Mandataire: Ecrepont, Robert
(86) Numéro de dépôt international: FR8700085
(87) Numéro de publication internationale: WO8706366

(56) Documents cités:
- DE-B- 1 299 429
- FR-A- 2 120 270
- US-A- 3 037 575
- PATENT ABSTRACTS OF JAPAN, vol.8, No 89, (P-270) (1526) 24 April 1984 & JP, A, 593509 (TOKYO SHIBAURA DENKI K.K.) 10 January 1984

## Description

L'invention se rapporte à un procédé en vue du guidage selon un trajet prédéterminé d'un mobile se déplaçant librement sur une aire support.

L'invention se rapporte également aux moyens pour la mise en oeuvre de ce procédé et au mobile pourvu de ces moyens.

Notamment mais non limitativement, l'invention concerne le guidage des non-voyants selon un trajet prédéterminé.

Dans ce domaine, il est connu (FR-A-2.382.886) de pourvoir le trajet prédéterminé d'un élément de guidage constitué d'une bande métallique placée au voisinage de la surface du sol qui constitue l'aire de déplacement et d'équiper le non-voyant d'un ensemble de guidage.

Cet ensemble de guidage comprend des organes qui permettent de détecter la présence de la bande métallique et de délivrer à l'utilisateur de l'ensemble une information révélatrice de cette présence.

La personne ainsi équipée peut aisément suivre la bande métallique et être rationnellement dirigée dans son déplacement.

Pour assurer la fonction de détection l'ensemble de guidage précité prévoit l'utilisation d'un détecteur de métaux.

Un tel appareil de détection de type connu (FR-A-1.493.026) comprend classiquement, d'une part, une chaine électronique adaptée qui génère un signal dans une bobine émettrice et, d'autre part, un circuit de traitement du signal d'écho capté par une bobine réceptrice.

Pour que ce procédé de guidage donne de bons résultats, il est nécessaire que le parcours préétabli soit dépourvu de toute pièce métallique autre que la bande directrice.

En effet, la présence par exemple d'une canalisation métallique, au voisinage de la bande directrice, suffit à perturber l'ensemble de détection et peut provoquer l'égarement de l'utilisateur de cet ensemble de détection.

Pour accroître la fiabilité du guidage, il est connu d'utiliser comme élément de guidage un fil conducteur de l'électricité parcouru par un courant.

Comme tout conducteur traverse par un courant, cet élément de guidage génère alors un champ magnétique qui peut être détecté par des moyens appropriés.

Si cette disposition permet d'accroître notablement la fiabilité d'un guidage, néanmoins, pour être opérationnel, l'élément de guidage doit nécessairement être alimenté électriquement, ce qui augmente les charges de fonctionnement et limite son application à des domaines particuliers, tels le guidage de chariots en milieu industriel.

On connaît (FR-A-2.120.270) un élément de guidage composé de polymères et d'aimants mais, outre que les aimants correspondants provoquent des interférences sur les matériels électriques environnants, le dispositif de détection proposé dans ce brevet ne permet pas, comme visé par l'invention, de distinguer la présence :
- de matériaux magnétiquement perméables et électriquement isolants,
- de matériaux qui sont magnétiquement perméables et conducteurs de l'électricité et,
- de matériaux non perméables magnétiquement et conducteurs.

Un résultat que l'invention vise à obtenir est un procédé de guidage qui met en oeuvre un élément de guidage qui, tout en étant facilement discernable de son environnement, ne nécessite pas d'apport d'énergie extérieure.

Un autre résultat que l'invention vise à obtenir est un procédé de guidage qui, pour être mis en oeuvre, ne nécessite que des moyens peu onéreux.

A cet effet, l'invention a pour objet un procédé de guidage notamment caractérisé en ce que :
- pour constituer l'élément de guidage, on choisit un matériau non seulement magnétiquement perméable mais encore électriquement isolant puis,
- au moyen de l'ensemble de guidage dont on équipe le mobile :
   . on détecte, parmi les matériaux constituant l'aire de déplacement, la présence :
      * de matériaux magnétiquement perméables et électriquement isolants,
      * de matériaux qui sont magnétiquement perméables et conducteurs de l'électricité et,
      * de matériaux non perméables magnétiquement et conducteurs, et,
   . on élabore pour chacun de ces matériaux détectés des signaux caractéristiques,
   . on exploite les signaux ainsi élaborés de manière à isoler celui représentatif de la présence du matériau magnétiquement perméable et électriquement isolant et,
   . on adresse le signal sélectionné à un moyen permettant de fournir un renseignement sur la présence et/ou l'absence de l'élément de guidage au voisinage du capteur.

Les moyens en vue de la mise en oeuvre du procédé de guidage sont principalement caractérisés en ce qu'ils comprennent :
- au niveau de l'aire sur laquelle le mobile à guider est appelé à se déplacer, un élément passif de guidage constitué d'un matériau magnétiquement perméable et électriquement isolant,
- au niveau du mobile, un ensemble de guidage comprenant lui-même :
   . un moyen permettant de détecter parmi les matériaux constituant l'aire de déplacement la présence :
      * de matériaux magnétiquement perméables et électriquement isolants,
      * de matériaux magnétiquement perméables et conducteurs de l'électricité et,
      * de matériaux non perméables magnétiquement et conducteurs,
   . un moyen permettant d'élaborer pour chacun des matériaux détectés, des signaux caractéristiques,
   . un moyen permettant l'exploitation des signaux ainsi élaborés de manière à isoler celui représentatif de la présence du matériau magnétiquement perméable et électriquement isolant,
   . un moyen par lequel le signal issu du moyen précédent est interprété pour fournir un renseignement sur la présence et/ou l'absence de l'élément de guidage au voisinage du capteur.

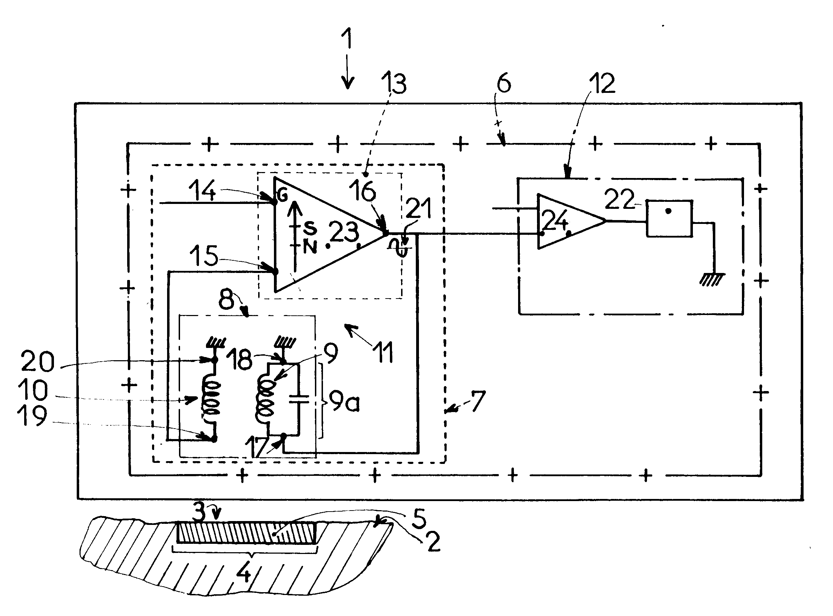

L'invention sera mieux comprise à l'aide de la description ci-après faite à titre d'exemple non limitatif, en regard du dessin ci-annexé qui représente un schéma synoptique d'une forme de mise en oeuvre de l'invention.

En se reportant au dessin, on voit que pour permettre le guidage selon un trajet prédéterminé (non représenté) d'un mobile 1 se déplaçant librement sur une aire à cet effet :
- on constitue classiquement au niveau de l'aire de déplacement 2 un élément de guidage 3, sous la forme d'une bande 4 en matériau 5 magnétiquement décelable,
- on équipe le mobile 1 d'un ensemble de guidage 6 comprenant d'une part, un dispositif 7 de détection magnétique de l'élément de guidage 3, lequel dispositif comprend quant à lui divers moyens dont un capteur 8 constitué d'une bobine émettrice 9 comprise dans un circuit oscillant 9a et d'une bobine réceptrice 10, une chaine électronique de traitement 11, et, d'autre part, un moyen 12 d'exploitation des signaux 21 issus du dispositif de détection 7, lequel moyen élabore une information renseignant le mobile 1 sur sa position par rapport à l'élément de guidage 3.

Cependant, au lieu d'utiliser un élément passif de guidage en matériau métallique et/ou un élément actif de guidage générant un champ magnétique, selon l'invention :
- pour constituer l'élément de guidage (3), on choisit un matériau (5) non seulement magnétiquement perméable mais encore électriquement isolant puis,
- au moyen de l'ensemble de guidage 6 dont on équipe le mobile 1 :
   . on détecte, parmi les matériaux constituant l'aire de déplacement, la présence :
      * de matériaux magnétiquement perméables et électriquement isolants,
      * de matériaux qui sont magnétiquement perméables et conducteurs de l'électricité et,
      * de matériaux non perméables magnétiquement et conducteurs, et,
   . on élabore pour chacun de ces matériaux détectés des signaux caractéristiques,
   . on exploite les signaux ainsi élaborés de manière à isoler celui représentatif de la présence du matériau magnétiquement perméable et électriquement isolant et,
   . on adresse le signal sélectionné à un moyen 12 permettant de fournir un renseignement sur la présence et/ou l'absence de l'élément 3 de guidage au voisinage du capteur 8.

L'invention se rapporte également aux moyens en vue de la mise en oeuvre du procédé de guidage annoncé et donc en vue du guidage suivant un trajet prédéterminé d'un mobile 1 se déplacant librement sur une aire 2 support, lesquels moyens comprennent :
- au niveau de l'aire de déplacement 2, un élément de guidage 3 constitué sous la forme d'une bande 4 en matériau 5 magnétiquement décelable,
- équipant le mobile 1, un ensemble de guidage 6 comprenant d'une part, un dispositif 7 de détection magnétique de l'élément de guidage 3, lequel dispositif comprend quant à lui divers moyens dont un capteur 8 constitué d'une bobine émettrice 9 comprise dans un circuit oscillant 9a et d'une bobine réceptrice 10, une chaine électronique de traitement 11, et, d'autre part, un moyen 12 d'exploitation des signaux 21 issus du dispositif de détection 7, lequel moyen élabore une information renseignant le mobile 1 sur sa position par rapport à l'élément de guidage 3.

Ces moyens sont principalement caractérisés en ce que :
- d'une part, l'élément 3 passif de guidage qu'ils comprennent au niveau de l'aire 2 sur laquelle le mobile 1 à guider est appelé à se déplacer, est constitué d'un matériau 5 magnétiquement perméable et électriquement isolant et,
- d'autre part, au niveau du mobile, l'ensemble de guidage 6 comprend lui-même :
   . un moyen 8 permettant de détecter parmi les matériaux constituant l'aire de déplacement la présence :
      * de matériaux magnétiquement perméables et électriquement isolants,
      * de matériaux magnétiquement perméables et conducteurs de l'électricité et,
      * de matériaux non perméables magnétiquement et conducteurs,
   . un moyen 10 permettant d'élaborer pour chacun des matériaux détectés, des signaux caractéristiques,
   . un moyen 13 permettant l'exploitation des signaux ainsi élaborés de manière à isoler celui représentatif de la présence du matériau magnétiquement perméable et électriquement isolant,
   . un moyen 12 par lequel le signal issu du moyen précédent 13 est interprété pour fournir un renseignement sur la présence et/ou l'absence de l'élément de guidage 3 au voisinage du capteur 8.

Comme cela a été évoqué précédemment, le dispositif 7 de détection de l'ensemble de guidage 6 comprend un moyen de détection et/ou un capteur 8 lui même constitué :
- d'une bobine émettrice 9 comprise dans un circuit oscillant 9a,
- d'une bobine réceptrice 10 disposée par rapport à la bobine émettrice 9 pour pouvoir lui être magnétiquement couplé, mais selon l'invention, le dispositif 7 de détection comprend également :
- d'une part, un moyen 13 d'exploitation des signaux issus de la bobine réceptrice 10 qui consiste en un moyen 23 d'amplification à gain G ajustable, lequel moyen 23 comporte en plus de son entrée d'alimentation 14 au moins une autre entrée 15 dite d'exploitation, au moins une sortie 16 d'un signal 21 formé dans ce moyen et,
- d'autre part, un circuit oscillant 9a qui comprend la bobine émettrice 9 qui est reliée par l'une 17 de ses bornes 17, 18 à la sortie du moyen d'amplification 23 et la bobine réceptrice 10 qui est quant à elle reliée par l'une 19 de ses bornes 19, 20 à l'entrée 15 du dit moyen d'amplification 23.

Conformément à l'invention, les éléments constitutifs du dispositif 7 de détection sont choisis pour lui permettre, par le biais d'un réglage approprié du gain G du moyen 23 d'amplification de se comporter comme un oscillateur.

Cependant, tel que le prévoit l'invention, le gain G du moyen d'amplification 23 est ajusté à un niveau N prédéterminé juste situé au dessous du seuil S d'oscillation de l'oscillateur qu'il constitue.

Dans une forme préférée de mise en oeuvre, le gain G du moyen 23 d'amplification est ajusté au niveau N précité pour que la fonction de transfert en boucle ouverte du circuit 11 électronique qui constitue le dispositif de détection atteigne une valeur voisine de moins 0,98 dans le lieu de Nyquist.

Suivant l'invention, outre son utilisation au niveau de la bobine 9 émettrice, le signal 21 issu du moyen d'amplification 23 est adressé au dispositif d'exploitation 12.

Ainsi constitué, en présence de matériau magnétiquement perméable et électriquement isolant, le dispositif 7 de détection atteint une valeur de moins un ou plus et l'oscillation fournit un signal sinusoïdal de fréquence de 1/2 LC.

En effet, en présence d'un tel matériau le couplage magnétique entre les deux bobines 9, 10 s'établit et, le courant induit dans la bobine réceptrice et ensuite exploité par le moyen d'amplification 13 provoque la formation d'un signal 21.

Ce signal 21 entretient l'oscillation du dispositif 7 de détection et permet d'alimenter le dispositif 12 d'exploitation.

Au contraire, en présence d'un matériau magnétiquement perméable mais électriquement conducteur le dispositif de détection ne réagit pas.

En effet, en dépit du fait que le couplage entre les bobines 9, 10 puisse être obtenu, il est largement atténué par l'absorption au coeur du matériau de l'énergie à transmettre à la bobine réceptrice.

L'énergie disponible au niveau de la bobine réceptrice n'est plus suffisante pour provoquer l'oscillation du dispositif de détection.

Dans une forme préférée de réalisation, l'élément 3 de guidage est principalement constitué de ferrite douce telle celle connue sous la marque FERROXCUBE et qui, contrairement à la ferrite normale ou dure, a l'avantage de ne pas être aimantable de manière permanente.

Dans une forme avantageuse de mise en oeuvre de l'invention, la ferrite est combinée sous forme de particules de granulométrie de quelques microns à un liant non conducteur de l'électricité.

La ferrite peut être de formule générale MFe₂O₄ où M représente un métal bivalent (cuivre, manganèse, magnésium, nickel, fer, zinc).

Par exemple, la piste sera composée de 75 % de ferrite nickel-zinc ou manganèse-zinc et de 25 % de liant lui-même par exemple constitué d'environ 15 % de triolite ou polyester et d'environ 10 % de solvant tel le white spirit et le benzène en quantité varient selon le temps de durcissement et la durêté recherchés.

Tel que cela apparaît sur le dessin, le dispositif 12 d'exploitation du signal 21 issu du dispositif 7 de détection comprend un moyen 22 en vue de délivrer au mobile 1, une information binaire sur sa position par rapport à l'élément de guidage 3.

Suivant une forme préférée de réalisation de l'invention, le moyen 22 qui délivre au mobile 2 l'information binaire de position est un élément sensitif vibrant.

Cette disposition permet avantageusement de préserver à l' information de position toute sa qualité informative, notamment en ambiance bruyante.

Avantageusement, le moyen d'amplification 13 est constitué par un amplificateur opérationnel 23.

De préférence, le dispositif d'exploitation 12 comprend un élément de mise en forme tel un amplificateur 24 du signal 21 issu du dispositif de détection.

Bien entendu, l'homme de l'art est à même de déterminer les composants les plus appropriés en vue de constituer l'ensemble de guidage 6.

L'avantage du matériau utilisé est d'être applicable à la manière d'une peinture ou sous forme d'un mince ruban appliqué sur le sol ou sous le revêtement superficiel du sol et, par exemple, sous une moquette ou sous un carrelage sous réserves de demeurer à une distance du capteur qui reste faible et, par exemple, de quelques centimètres pour éviter toute perturbation par des corps métalliques environnants.

Sans que cela soit limitatif pour l'invention, seule une forme de réalisation de l'élément de guidage est représentée.

En effet, l'homme de l'art est a même de déterminer selon l'environnement la forme de réalisation la plus appropriée de l'élément de guidage.

Cependant, on notera qu'une autre forme avantageuse de mise en oeuvre du matériau, magnétiquement perméable et électriquement isolant, consiste à l'enfermer dans une gaine tubulaire souple de grande longueur et de section appropriée.

Pour disposer cette gaine au niveau du sol à équiper, il suffit d'y pratiquer une simple saignée de dimensions compatibles avec la gaine puis d'y introduire cette dernière et de refermer la saignée.

Dans le même esprit, on peut également concevoir une forme demise en oeuvre du matériau consistant à ouvrir une saignée dans le sol à équiper, puis à reboucher au moins partiellement cette saignée avec du matériau magnétiquement perméable et électriquement isolant.

Ces formes de mise en oeuvre permettent d'éviter la formation d'éléments saillant sur la surface du sol.

Constitué d'un produit uniquement perméable aux lignes de champ magnétique, l'élément de guidage 3 se différencie typiquement des métaux ferreux et non ferreux qui sont respectivement soit magnétiques et conducteurs soit conducteurs uniquement.

Quant au capteur, les bobines émettrice 9 et réceptrice 10, quelles qu'en soient les formes, sont de préférence concentriques.

En présence de l'élément de guidage, le couplage entre les bobines est modifié ; il augmente. La transmission est donc améliorée en amplitude mais la phase est aussi modifiée.

De ce fait, pour discerner le matériau perméable magnétiquement mais électriquement isolant des autres métaux, le moyen d'exploitation peut analyser les variations d'amplitude ou analyser les modifications de phase induites en sens inverse par ces matériaux.

Dans les deux modes de réalisation, on pourrait craindre une dérive en fonction de la température du point de réglage initial juste sous le régime oscillatoire.

Pour y remédier et améliorer les performances, sont prévus un montage avec amplificateurs opérationnels haute fréquence et des systèmes asservis anti-dérives soit sur transistors, soit sur circuits intégrés.

Dans l'application au guidage des non-voyants, le dispositif sera avantageusement associé de manière amovible à la canne, les bobines à la base de la canne et le reste du circuit dans un boîtier adapté près de la partie supérieure, le boîtier étant relié aux bobines par exemple, un cordon extensible passant extérieurement à la canne.

## Revendications

1. Procédé en vue du guidage suivant un trajet prédéterminé d'un mobile (1) se déplaçant librement sur une aire (2) support, selon lequel procédé :
- on constitue au niveau de l'aire (2) de déplacement un élément de guidage (3) sous la forme d'une bande (4) en matériau (5) magnétiquement décelable,
- on équipe le mobile (1) d'un ensemble de guidage (6) comprenant d'une part un dispositif (7) de détection magnétique de l'élément (3) de guidage, lequel dispositif comprend quant à lui tant un moyen de détection tel un capteur (8) constitué d'une bobine émettrice (9) comprise dans un circuit oscillant (9a) et d'une bobine réceptrice (10), qu'une chaine (11) électronique de traitement, et, d'autre part, un dispositif (12) d'exploitation des signaux (21) issus du dispositif de détection (7), lequel dispositif élabore une information renseignant le mobile sur sa position par rapport à l'élément de guidage (3),
ce procédé étant **CARACTERISE** en ce que :
- pour constituer l'élément de guidage (3), on choisit un matériau (5) non seulement magnétiquement perméable mais encore électriquement isolant puis,
- au moyen de l'ensemble de guidage (6) dont on équipe le mobile (1) :
. on détecte, parmi les matériaux constituant l'aire de déplacement, la présence :
* de matériaux magnétiquement perméables et électriquement isolants,
* de matériaux qui sont magnétiquement perméables et conducteurs de l'électricité et,
* de matériaux non perméables magnétiquement et conducteurs, et,
. on élabore pour chacun de ces matériaux détectés des signaux caractéristiques,
. on exploite les signaux ainsi élaborés de manière à isoler celui représentatif de la présence du matériau magnétiquement perméable et électriquement isolant et,
. on adresse le signal sélectionné à un moyen (12) permettant de fournir un renseignement sur la présence et/ou l'absence de l'élément (3) de guidage au voisinage du capteur (8).

2. Procédé selon la revendication 1 et selon lequel on met en oeuvre un matériau électriquement isolant et magnétiquement perméable **caractérisé** en ce que ce matériau est non aimantable de manière permanente.

3. Moyens en vue de la mise en oeuvre du procédé selon la revendication 1 ou 2 et donc en vue du guidage suivant un trajet prédéterminé d'un mobile (1) se déplacant librement sur une aire (2) support, lesquels moyens comprennent :
- au niveau de l'aire de déplacement (2), un élément de guidage (3) constitué sous la forme d'une bande (4) en matériau (5) magnétiquement décelable,
- équipant le mobile (1), un ensemble de guidage (6) comprenant d'une part, un dispositif (7) de détection magnétique de l'élément de guidage (3), lequel dispositif comprend quant à lui divers moyens dont un capteur (8) constitué d'une bobine émettrice (9) comprise dans un circuit oscillant (9a) et d'une bobine réceptrice (10), une chaine électronique de traitement (11), et, d'autre part, un moyen (12) d'exploitation des signaux (21) issus du dispositif de détection (7), lequel moyen élabore une information renseignant le mobile (1) sur sa position par rapport à l'élément de guidage (3),
**caractérisés** en ce que, d'une part, l'élément (3) passif de guidage qu'ils comprennent, au niveau de l'aire (2) sur laquelle le mobile (1) à guider est appelé à se déplacer, est constitué au moins en partie d'un matériau (5) magnétiquement perméable et électriquement isolant et, d'autre part, au niveau du mobile, l'ensemble de guidage (6) comprend lui-même :
- un moyen (8) permettant de détecter parmi les matériaux constituant l'aire de déplacement la présence :
. de matériaux magnétiquement perméables et électriquement isolants,
. de matériaux magnétiquement perméables et conducteurs de l'électricité et,
. de matériaux non perméables magnétiquement et conducteurs,
- un moyen (10) permettant d'élaborer pour chacun des matériaux détectés, des signaux caractéristiques,
- un moyen (13) permettant l'exploitation des signaux ainsi élaborés de manière à isoler celui représentatif de la présence du matériau magnétiquement perméable et électriquement isolant,
- un moyen (12) par lequel le signal issu du moyen précédent (13) est interprété pour fournir un renseignement sur la présence et/ou l'absence de l'élément de guidage (3) au voisinage du capteur (8).

4. Moyens selon la revendication 3 **caractérisés** en ce que le dispositif de détection (7) équipant l'ensemble de guidage (6) comprend :
- d'une part, un moyen (13) d'amplification d'exploitation des signaux issus de la bobine réceptrice qui consiste en un moyen (23) à gain (G) ajustable, lequel moyen (23) comporte en plus de son entrée d'alimentation (14) eu moins une autre entrée (15) dite d'exploitation, au moins une sortie (16) d'un signal (21) formé dans ce moyen et,
- d'autre part, un circuit oscillant (9a) qui comprend la bobine émettrice (9) qui est reliée par l'une (17) de ses bornes (17, 18) à la sortie du moyen d'amplification (23) et la bobine réceptrice (10) qui est quant à elle reliée par l'une (19) de ses bornes (19, 20) au dit moyen d'amplification (23).

5. Moyens selon la revendication 4 **caractérisés** en ce que les éléments constitutifs du dispositif (7) de détection sont choisis pour lui permettre, par le biais d'un réglage approprié du gain (G) du moyen (23) d'amplification de se comporter comme un oscillateur.

6. Moyens selon la revendication 4 ou 5 **caractérisés** en ce que le gain (G) du moyen d'amplification (23) est ajusté à un niveau (N) prédéterminé situé au dessous du seuil (S) d'oscillation de l'oscillateur qu'il constitue.

7. Moyens selon la revendication 6 **caractérisés** en ce que le gain (G) du moyen (23) d'amplification est ajusté au niveau (N) précité pour que la fonction de transfert en boucle ouverte du circuit (11) électronique qui constitue le dispositif de détection atteigne une valeur voisine de moins 0,98 dans le lieu de Nyquist.

8. Moyens selon la revendication 4 **caractérisés** en ce que outre son utilisation au niveau de la bobine (9) émettrice, le signal (21) issu du moyen d'amplification (23) est adressé au dispositif d'exploitation (12).

9. Moyens selon la revendication 3 **caractérisés** en ce que l'élément (3) de guidage est principalement constitué de ferrite douce combinée sous forme de particules à un liant non conducteur de l'électricité.

## Claims

1. A method of guiding, along a predetermined path, a moving object (1) freely undergoing displacement on a supporting area (2), according to which method:
- a guiding element (3) in the form of a belt (4) made of a magnetically detectable material (5) is arranged at the level of the displacement area (2),
- the moving object (1) is provided with a guiding assembly (6) comprising on the one hand a device (7) for magnetically detecting the guiding element (3), the said device itself comprising both a means of detection such as a sensor (8), formed by a supply coil (9) contained in an oscillating circuit (9a) and a receiving coil (10), and an electronic processing system (11), and on the other hand a device (12) for evaluating the signals (21) issuing from the detection device (7), the said device (12) generating information informing the moving object of its position in relation to the guiding element (3),
this method being characterised in that:
- a material (5) which is not only magnetically permeable but also electrically insulating is chosen to form the guiding element (3), then
- by means of the guiding assembly (6) with which the moving object (1) is provided:
· the presence is detected, from among the materials forming the displacement area, of:
* magnetically permeable and electrically insulating materials,
* materials which are magnetically permeable and electrically conductive, and
* materials which are magnetically non-permeable and conductive, and
· characteristic signals are generated for each of these materials detected,
· the signals thus generated are evaluated so as to isolate that signal which is representative of the presence of the magnetically permeable and electrically insulating material, and
· the signal selected is addressed to a means (12) enabling information to be provided concerning the presence and/or absence of the guiding element (3) in the vicinity of the sensor (8).

2. A method according to claim 1 and according to which an electrically insulating and magnetically permeable material is used, characterised in that this material is not permanently magnetisable.

3. Means of implementing the method according to claim 1 or 2 and therefore of guiding, along a predetermined path, a moving object (1) freely undergoing displacement on a supporting area (2), which means comprise:
- a guiding element (3) in the form of a belt (4) made of a magnetically detectable material (5) at the level of the displacement area (2),
- a guiding assembly (6), with which the moving object (1) is provided, comprising on the one hand a device (7) for magnetically detecting the guiding element (3), the said device itself comprising various means including a sensor (8), formed by a supply coil (9) contained in an oscillating circuit (9a) and a receiving coil (10), and an electronic processing system (11), and on the other hand a means (12) of evaluating the signals (21) issuing from the detection device (7), the said means generating information informing the moving object (1) of its position in relation to the guiding element (3),
characterised in that on the one hand the passive guiding element (3) which the means comprise, at the level of the area (2) on which the moving object (1) to be guided is intended to undergo displacement, is made at least partly of a magnetically permeable and electrically insulating material (5), and on the other hand, at the level of the moving object, the guiding assembly (6) itself comprises:
- a means (8) enabling the presence to be detected, from among the materials forming the displacement area, of:
· magnetically permeable and electrically insulating materials,
· materials which are magnetically permeable and electrically conductive, and
· materials which are magnetically non-permeable and conductive,
- a means (10) enabling characteristic signals to be generated for each of the materials detected,
- a means (13) enabling the signals thus generated to be evaluated so as to isolate that signal which is representative of the presence of the magnetically permeable and electrically insulating material,
- a means (12) by which the signal issuing from the preceding means (13) is interpreted to provide information concerning the presence and/or absence of the guiding element (3) in the vicinity of the sensor (8).

4. Means according to claim 3, characterised in that the detection device (7), with which the guiding assembly (6) is provided, comprises:
- on the one hand an amplification means (13) for evaluating the signals issuing from the receiving coil which consists of a means (23) with adjustable gain (G), the said means (23) comprising in addition to its feed input (14) at least one other "evaluation" input (15) and at least one output (16) for a signal (21) formed in this means, and
- on the other hand an oscillating circuit (9a) which comprises the supply coil (9), which is connected by one (17) of its terminals (17, 18) to the output of the amplification means (23), and the receiving coil (10) which is itself connected by one (19) of its terminals (19, 20) to the said amplification means (23).

5. Means according to claim 4, characterised in that the elements forming the detection device (7) are chosen to enable the latter to behave like an oscillator by means of suitably adjusting the gain (G) of the amplification means (23).

6. Means according to claim 4 or 5, characterised in that the gain (G) of the amplification means (23) is adjusted to a predetermined level (N) below the oscillation threshold (S) of the oscillator it forms.

7. Means according to claim 6, characterised in that the gain (G) of the amplification means (23) is adjusted to the aforesaid level (N) so that the open loop transfer function of the electronic circuit (11) which forms the detection device attains a value approaching minus 0.98 in the Nyquist plot.

8. Means according to claim 4, characterised in that in addition to its use at the level of the supply coil (9), the signal (21) issuing from the amplification means (23) is addressed to the evaluation device (12).

9. Means according to claim 3, characterised in that the guiding element (3) is principally made of soft ferrite combined in the form of particles with a binding agent which is not electrically conductive.

## Patentansprüche

1. Verfahren zum Führen eines beweglichen Körpers (1) entlang einer vorgegebenen Bahn, welcher sich frei auf einer Trägerfläche (2) bewegt, bei welchem:
- in Höhe der Bewegungsfläche (2) ein Führungsteil (3) in Form eines Streifens (4) aus magnetisch nachweisbarem Werkstoff angeordnet wird,
- der bewegliche Körper (1) mit einer Führungsgruppe (6) ausgerüstet wird, welche einerseits eine Vorrichtung (7) zur magnetischen Erfassung des Führungsteils (3) aufweist, wobei die Vorrichtung selbst als Erfassungseinrichtung beispielsweise sowohl einen Sensor (8) enthält der aus einer Sendespule (9) als Teil eines Schwingkreises (9a) und aus einer Empfängerspule (10) besteht, als auch eine elektronische Verarbeitungskette, und welche andererseits eine Vorrichtung (12) zum Auswerten von Signalen (21) aufweist, die von der Erfassungsvorrichtung (7) abgegeben werden, wobei die Vorrichtung Informationen über die Position des beweglichen Körpers gegenüber dem Führungsteil (3) zur Mitteilung an diesen erzeugt, **dadurch GEKENNZEICHNET,**
- daß zur Bildung des Führungsteils (3) ein Werkstoff (5) gewählt wird, der nicht nur magnetisch permeabel sondern auch elektrisch isolierend ist, und anschließend
- mit Hilfe der Führungsgruppe (6), mit welcher der bewegliche Körper (1) ausgerüstet ist:
· unter den Werkstoffen, aus denen die Bewegungsfläche besteht, das Vorhandensein von:
* magnetisch permeablen und elektrisch isolierenden Werkstoffen,
* von magnetisch permeablen und elektrisch leitenden Werkstoffen, und
* von magnetisch nicht permeablen und leitenden Werkstoffen festgestellt wird, und
· für jeden dieser erfaßten Werkstoffe charakteristische Signale erzeugt werden,
· die so erzeugten Signale in der Weise ausgewertet werden, daß diejenigen isoliert werden, die für das Vorhandensein eines magnetisch permeablen und elektrisch isolierenden Werkstoffs repräsentativ sind, und
· das ausgewählte Signal an eine Einrichtung (12) adressiert wird, mittels welcher Aufschluß über das Vorhandensein und/oder Fehlen des Führungsteils (3) in der Nähe des Sensors (8) erhalten werden kann.

2. Verfahren nach Anspruch 1, bei welchem ein elektrisch isolierender und magnetisch permeabler Werkstoff eingesetzt wird, **dadurch gekennzeichnet,** daß dieser Werkstoff nicht permanent magnetisierbar ist.

3. Einrichtung zur Durchführung des Verfahrens nach Anspruch 1 oder 2 und somit zum Führen eines beweglichen Körpers (1) entlang einer vorgegebenen Bahn, welcher sich frei auf einer Trägerfläche (2) bewegt, welche folgendes aufweist:
- in Höhe der Bewegungsfläche (2) ein Führungsteil (3) in Form eines Streifens (4) aus magnetisch nachweisbarem Werkstoff
- wobei der bewegliche Körper (1) mit einer Führungsgruppe (6) ausgerüstet ist, welche einerseits eine Vorrichtung (7) zur magnetischen Erfassung des Führungsteils (3) aufweist, wobei die Vorrichtung selbst als Erfassungseinrichtung beispielsweise sowohl einen Sensor (8) enthält, der aus einer Sendespule (9) als Teil eines Schwingkreises (9a) und aus einer Empfängerspule (10) besteht, als auch eine elektronische Verarbeitungskette, und welche andererseits eine Vorrichtung (12) zum Auswerten von Signalen (21) aufweist, die von der Erfassungsvorrichtung (7) abgegeben werden, wobei die Vorrichtung Informationen über die Position des beweglichen Körpers gegenüber dem Führungsteil (3) zur Mitteilung an diesen erzeugt, **dadurch gekennzeichnet**, daß einerseits das darin enthaltene passive Führungsteil (3) auf Seiten der Fläche (2), auf welcher der zu führende bewegliche Körper (1) sich bewegen soll, zumindest teilsweise aus einem magnetisch permeablen und elektrisch isolierenden Werkstoff (5) besteht, und andererseits die Führungsgruppe (6) auf Seiten des beweglichen Körpers ihrerseits folgendes aufweist:
- eine Einrichtung (8), mit welcher unter den Werkstoffen, aus denen die Bewegungsfläche besteht, das Vorhandensein von:
· magnetisch permeablen und elektrisch isolierenden Werkstoffen,
· von magnetisch permeablen und elektrisch leitenden Werkstoffen, und
· von magnetisch nicht permeablen und leitenden Werkstoffen festgestellt wird, und
- eine Einrichtung (10), mit welcher für jeden dieser erfaßten Werkstoffe charakteristische Signale erzeugt werden können,
- eine Einrichtung (13), mit welcher die so erzeugten Signale in der Weise ausgewertet werden können, daß diejenigen isoliert werden, die für das Vorhandensein eines magnetisch permeablen und elektrisch isolierenden Wertstoffs repräsentativ sind, und
- eine Einrichtung (12), mit welcher das von der vorhergehenden Einrichtung (13) abgegebene Signal ausgewertet wird, um Aufschluß über das Vorhandensein und/oder Fehlen des Führungsteils (3) in der Nähe des Sensors (8) zu erhalten.

4. Einrichtung nach Anspruch 3, **dadurch gekennzeichnet**, daß die Erfassungseinrichtung (7), mit welcher die Führungsgruppe (6) ausgerüstet ist, folgendes aufweist:
- einerseits eine Einrichtung (13) zur Operationsverstärkung der von der Empfangsspule abgegebenen Signale, welche aus einer Einrichtung (23) mit einstellbarem Faktor (G) besteht, wobei die Einrichtung (23) darüberhinaus an ihrem Versorgungseingang (14) mindestens einen weiteren Eingang (15), den Operationseingang, und mindestens einen Ausgang (16) für ein in dieser Einrichtung gebildetes Signal (21) aufweist, und
- andererseits einen Schwingkreis (9a), der die Sendespule (9), welche über einen (17) ihrer Anschlüsse (17, 18) mit dem Ausgang der Verstärkereinrichtung (23) verbunden ist, und die Empfängerspule (19) enthält, die ihrerseits über einen (19) ihrer Anschlüsse (19, 20) mit der Verstärkereinrichtung (23) verbunden ist.

5. Einrichtung nach Anspruch 4, **dadurch gekennzeichnet**, daß die Bauteile, aus denen die Erfassungseinrichtung (7) besteht, so gewählt sind, daß letztere infolge der Beaufschlagung mit einer entsprechenden Regelung des Faktors (G) der Verstärkereinrichtung (23) sich wie ein Schwingkreis verhält.

6. Einrichtung nach Anspruch 4 oder 5, **dadurch gekennzeichnet**, daß der Faktor (G) der Verstärkereinrichtung (23) auf einen vorgegebenen Pegelwert (N) eingestellt ist, der unterhalb der Schwingschwelle (S) des damit gebildeten Schwingkreises liegt.

7. Einrichtung nach Anspruch 6, **dadurch gekennzeichnet**, daß der Faktor (G) der Verstärkereinrichtung (23) auf den Pegelwert (N) so eingestellt ist, daß die Funktion der Übertragung in offenem Wirkungsweg der elektronischen Schaltung (11), aus der die Erfassungseinrichtung besteht, einen Wert um mindestens 0,98 im Nyquistbereich erreicht.

8. Einrichtung nach Anspruch 4, **dadurch gekennzeichnet**, daß das von der Verstärkereinrichtung (23) abgegebene Signal nicht nur auf Seiten der Sendespule (9) verwendet wird, sondern auch an die Auswerteeinrichtung (12) adressiert wird.

9. Einrichtung nach Anspruch 3, **dadurch gekennzeichnet**, daß das Führungsteil (3) hauptsächlich aus weichmagnetischer Ferritverbindung besteht, die in Partikelform mit einem elektrisch nicht-leitenden Bindemittel vorliegt.
